# NEUE EUROPÄISCHE PATENTSCHRIFT

(11) **EP 0 764 189 B2**
(45) Veröffentlichungstag und Bekanntmachung des Hinweises auf die Entscheidung über den Einspruch: **27.02.2002**
(45) Hinweis auf die Patenterteilung: 08.04.1998
(21) Anmeldenummer: 95921822.3
(22) Anmeldetag: 03.06.1995
(51) Int. Cl.: C08L 33/06

(54) **VERWENDUNG VON MISCHUNGEN AUS POLYMETHYLMETHACRYLAT UND STYROL/ACRYLNITRIL-COPOLYMEREN ZUR HERSTELLUNG LASERBESCHRIFTETER FORMTEILE**
USE OF MIXTURES OF POLYMETHYL METHACRYLATE AND STYRENE/ACRYLONITRILE COPOLYMERS TO PRODUCE LASER-INSCRIBED MOULDED ARTICLES
UTILISATION DE MELANGES DE POLYMETHACRYLATE DE METHYLE ET DE COPOLYMERES DE STYRENE/ACRYLONITRILE AFIN DE PRODUIRE DES PIECES MOULEES GRAVEES AU LASER

(30) Priorität: 07.06.1994 DE 4419847
(43) Veröffentlichungstag der Anmeldung: 26.03.1997
(73) Patentinhaber: BASF Aktiengesellschaft, 67063 Ludwigshafen (DE)
(72) Erfinder: MC KEE, Graham, Edmund, D-67433 Neustadt (DE); WELZ, Martin, D-67098 Bad Dürkheim (DE); DECKERS, Andreas, D-55234 Flomborn (DE); WAGNER, Daniel, D-67098 Bad Dürkheim (DE); DAMM, Paul, Otto, D-67227 Frankenthal (DE); OSLOWSKI, Hans-Josef, D-48163 Muenster (DE)
(86) Internationale Anmeldenummer: EP9502110
(87) Internationale Veröffentlichungsnummer: WO9533793

(56) Entgegenhaltungen:
- EP-A- 0 062 223
- EP-A- 0 327 508
- US-A- 4 722 595
- POLYMER, Band 28, Nr. 6, veröffentlicht Mai POLYMER, Band 28, Nr. 6, veröffentlicht Mai 1987, M.E. FOWLER et al. "Effect of 1987, M.E. FOWLER et al. "Effect of copolymer composition on the miscibility of copolymer composition on the miscibility of blends of styrene-acrylonitrile copolymers blends of styrene-acrylonitrile copolymers with poly(methyl methacrylate)", Seiten with poly(methyl methacrylate)", Seiten 1177-1184, 1177-1184,
- KUNSTSTOFFE, Band 81, Nr. 4, veröffentlicht KUNSTSTOFFE, Band 81, Nr. 4, veröffentlicht April 1991, M.C. HERKT-MAETZKY, April 1991, M.C. HERKT-MAETZKY, "Kunststoffteile mit Laser beschriften", "Kunststoffteile mit Laser beschriften", Seiten 341-346, Seiten 341-346,

## Beschreibung

Die vorliegende Erfindung betrifft die Verwendung von Polymermischungen, enthaltend als wesentliche Komponenten

| | | |
|---|---|---|
| A) | 40 bis 99 Gew.-% | eines Polymeren eines Alkylesters der (Meth)acrylsäure |
| B) | 1 bis 50 Gew.-% | eines Copolymeren aus Styrol und Acrylnitril mit einem Acrylnitrilgehalt von 18 bis 23 Gew.-% |
| C) | 0 bis 50 Gew.-% | eines Kautschuks |
| D) | 0 bis 20 Gew.-% | Zusatzstoffe und Verarbeitungshilfsmittel |

zur Herstellung von mit Hilfe von Laserstrahlung mit einer Beschriftung versehenen Formkörpern.

Die Herstellung laserbeschrifteter Formteile aus Polymethylmethacrylat (PMMA) ist ohne Zusatz von Additiven zur Erhöhung des Absorptionskoeffizienten der eingesetzten Laserstrahlung bislang nicht in zufriedenstellender Qualität möglich.

Insbesondere für die Beschriftung mit dem am häufigsten verwendeten Nd:YAG-Laser werden Pigmente zugesetzt (siehe beispielsweise EP-A 327 508), die jedoch die Transparenz des PMMA, die häufig Voraussetzung für den Einsatz von PMMA in der Anwendung ist, negativ beeinflussen. Im Bereich von Meßbechern, Skalen und Meßlinealen kann dies nicht akzeptiert werden; andererseits ist gerade bei diesen Anwendungen eine dauerhafte, sowohl im Durchlicht als auch im Auflicht gut lesbare Beschriftung wünschenswert.

Der Zusatz von Ruß zur Verbesserung der Laserbeschriftbarkeit von Formmassen aus thermoplastischen Kunststoffen ist in der DE-C 30 44 722 beschrieben, im Falle von PMMA führt dies jedoch nicht zu zufriedenstellenden Ergebnissen.

Mischungen aus PMMA und Styrol/Acrylnitril-Copolymeren (PSAN) sind bekannt und z.B. in Polymer 28(1987), 1177 beschrieben; bei einem Acrylnitril-Gehalt des PSAN im Bereich von 18 bis 23 Gew.-% bleibt die Transparenz von aus den Formteilen hergestellten Formmassen sehr gut erhalten.

Der vorliegenden Erfindung lag daher die Aufgabe zugrunde, PMMA so zu modifizieren, daß eine möglichst kontrastreiche konturenscharfe Beschriftung mit Nd:YAG-Lasem möglich ist, ohne daß dadurch die Transparenz der beschrifteten Formteile notwendigerweise leidet.

Diese Aufgabe wurde durch die erfindungsgemäße Verwendung der eingangs beschriebenen Formmassen gemäß Anspruch 1 gelöst.

Bevorzugte Ausführungsformen der erfindungsgemäßen Verwendung sind den Unteransprüchen zu entnehmen.

Als Polymere A) von Alkylestern der (Meth)acrylsäure werden vorzugsweise solche aus

| | |
|---|---|
| 50 bis 100 Gew.-% | eines C₁-C₁₈-Alkylesters der (Meth)acrylsäure und |
| 0 bis 50 Gew.-% | weiteren radikalisch polymerisierbaren Monomeren |

eingesetzt.

Als Ester der Acrylsäure werden im allgemeinen die C₁-C₁₈-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren, eingesetzt.

Als Ester der Methacrylsäure werden im allgemeinen die C₁-C₁₈-Alkylester wie Methyl-, Ethyl-, n-Propyl-, i-Propyl, n-Butyl-, i-Butyl-, sek.-Butyl-, tert.-Butyl-, Pentyl-, Hexyl-, Heptyl-, Octyl-, 2-Ethylhexyl-, Nonyl-, Decyl-, Lauryl- oder Stearylmethacrylat, bevorzugt Methylmethacrylat, sowie Mischungen dieser Monomeren, eingesetzt.

Die Verwendung von hydroxy-, epoxy- und aminofunktionellen Methacrylaten und Acrylaten ist ebenfalls möglich.

Die Acrylate und Methacrylate sowie Mischungen davon setzt man im allgemeinen in Mengen im Bereich von 50 bis 100, bevorzugt von 80 bis 100 Gew.-%, bezogen auf die Gesamtmenge an Monomeren der Komponente A) ein.

Als weitere Comonomere kann man bis zu 50 Gew.-%, bevorzugt bis zu 20 Gew.-%, der folgenden beispielhaft aufgeführten Monomeren einsetzen:
- Vinylaromaten wie Styrol, alpha-Methylstyrol, Vinyltoluol oder p-(tert.-Butyl)styrol;
- Acryl- und Methacrylsäure;
- Acryl- und Methacrylamid;
- Maleinsäure sowie deren Imide und C₁-C₁₀-Alkylester;
- Fumarsäure sowie deren Imide und C₁-C₁₀-Alkylester;
- Itaconsäure sowie deren Imide und C₁-C₁₀-Alkylester;
- Acryl- und Methacrylnitril.

Zweckmäßigerweise wählt man die Monomeren so aus, daß das gebildete Polymerisat eine Glasübergangstemperatur von mindestens 30°C aufweist, um ein Verkleben der gebildeten Polymerisatperlen zu vermeiden.

Als besonders vorteilhaft haben sich nach bisherigen Beobachtungen Polymerisate aus 80 bis 100 Gew.-% Methylmethacrylat und 0 bis 20 Gew.-% Methylacrylat und/oder n-Butylacrylat in einem Molekulargewichtsbereich von Mₙ (Zahlenmittel) 20.000 bis 300.000 g/mol erwiesen.

Entsprechende Produkte wie auch Verfahren zu deren Herstellung sind an sich bekannt und in der Literatur beschrieben. Ein kommerzielles Produkt ist zum Beispiel Lucryl® der BASF Aktiengesellschaft.

Als Komponente B) enthalten die erfindungsgemäß verwendeten Formmassen 1 bis 50, vorzugsweise 3 bis 40 und insbesondere 5 bis 35 Gew.-% eines Copolymeren aus Styrol und Acrylnitril mit einem Acrylnitril-Anteil von 18 bis 23 Gew.-%.

Die Viskositätszahl derartiger Polymerer liegt im allgemeinen im Bereich von 40 bis 100, vorzugsweise von 50 bis 90 ml/g (gemessen in 0,5 gew.-%iger Lösung in Dimethylformamid bei 25°C).

Als weitere Komponente C kann in den erfindungsgemäß verwendeten Formmassen ein Kautschuk enthalten sein. Falls die Transparenz der Produkte ein wesentliches Kriterium ist, ist darauf zu achten, daß der Brechungsindexunterschied zwischen der Matrix aus A) + B) und dem Kautschuk nicht größer als 0,007, vorzugsweise nicht größer als 0,005 und insbesondere nicht größer als 0,002 ist.

Die Teilchengröße der Kautschukteilchen in der Matrix liegt im allgemeinen im Bereich von 0,05 bis 2 µm, vorzugsweise 0,05 bis 0,5 µm und besonders bevorzugt unter 0,25 µm.

Weiterhin sollte der Kautschuk vorzugsweise eine Glasübergangstemperatur von unter 0°C, vorzugsweise von unter -10°C aufweisen.

Grundsätzlich eignen sich alle Arten von kommerziell erhältlichen Kautschukarten, auch solche mit inhomogenem (Kern/Schale)-Aufbau.

Ganz allgemein läßt sich durch Variation der Art der Monomeren und ihrer Zugabereihenfolge die Morphologie der Kautschuke in weitem Maße beeinflussen.

Nur stellvertretend seien hier als Monomeren für die Herstellung von Kautschuken Butadien, Isopren, n-Butylacrylat und 2-Ethylhexylacrylat genannt. Diese Monomeren können mit weiteren Monomeren wie z.B. Styrol, Acrylnitril, und weiteren Acrylaten oder Methacrylaten oder Vinylalkylethern polymerisiert werden.

Als bevorzugte Kautschuke seien hier Pfropfmischpolymerisate aus
Alkylacrylaten, Butadien und Vinylalkylethern oder deren Mischungen als Pfropfgrundlage
   und
Pfropfhüllen aus Styrol oder subst. Styrolen und Acrylnitril und/oder Methacrylnitril sowie ggf. (Meth)acrylsäureestern
genannt.

Solche Produkte werden beispielsweise in der PS 1 260 135, DE-OS 32 27 555, DE-OS 28 26 935, DE-OS 31 49 357, DE-OS 31 49 358 und der DE-OS 34 14 118 beschrieben.

In manchen Fällen hat es sich als vorteilhaft erwiesen, den erfindungsgemäß verwendeten Formmassen geringe Mengen, im allgemeinen nicht mehr als 200, vorzugsweise 1 bis 50 und insbesondere 2 bis 20 ppm Ruß, Graphit oder Knochenkohle zuzusetzen, da dadurch in einigen Fällen die Lesbarkeit der Laserbeschriftung verbessert werden kann.

Neben den vorstehend beschriebenen Komponenten können die Formmassen noch weitere übliche Zusatzstoffe und Verarbeitungshilfsmittel enthalten.

Nur beispielhaft seien hier Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-% (Stabilisatoren, Pigmente und Schmiermittel).

Entsprechende Verbindungen sind dem Fachmann bekannt und beispielsweise in der EP-A 327 384 beschrieben.

Erfindungsgemäß werden die vorstehend beschriebenen Formmassen zur Herstellung von mit Hilfe von Laserstrahlung mit einer Beschriftung versehenen Formkörpern verwendet.

Die Herstellung der zu beschriftenden Formkörper ist nicht Gegenstand der Erfindung; entsprechende Verfahren sind dem Fachmann aus der Literatur bekannt. Nur beispielhaft sei als bevorzugtes Verfahren die Abmischung der Komponenten in der Schmelze auf einem Extruder und anschließende Verarbeitung des erhaltenen Granulats durch Spritzguß erwähnt.

Bei der erfindungsgemäßen Verwendung wird Laserstrahlung verwendet. Besonders bevorzugt werden Nd:YAG-Festkörperlaser eingesetzt. Die zu beschriftenden Formkörper können z.B. über eine entsprechende Maske, die der gewünschten Beschriftung entspricht, der Strahlung ausgesetzt werden, die Steuerung des Elektronen- oder Laserstrahls kann aber auch mit Hilfe eines Computers erfolgen.

Intensität und Dauer der Belichtung beeinflussen dabei Kontrast, Eindringtiefe und Oberflächenstruktur des Formkörpers. Detailliertere Aussagen hierüber finden sich beispielsweise in zwei einschlägigen Veröffentlichungen in Kunststoffe 81 (1991), Heft 4, Seiten 341 ff sowie in Kunststoffe 78 (1988), Heft 8, Seiten 688ff die sich mit der Laserbeschriftung von Formkörpern aus thermoplastischen Kunststoffen befassen. Weiterhin seien die DE-A 39 36 926, DE 36 19 670, DE 30 44 722 und die EP-A 190 997 genannt.

Die nach der erfindungsgemäßen Verwendung erhältlichen beschrifteten Formkörper zeichnen sich durch einen guten Kontrast zwischen Beschriftung und Hintergrund aus, bei gleichzeitig guter Oberflächenstruktur.

Besonders gute Ergebnisse werden erzielt, wenn man aus den hierin beschriebenen Massen hergestellte Formkörper mit einer mindestens zweischichtigen Lackierung versieht, vorzugsweise mit einer ersten hellen und einer darauf aufgebrachten weiteren dunkleren Lackschicht, die gegenüber der ersten Lackschicht einen ausreichenden Farbkontrast zur guten Lesbarkeit aufweist. Der Gesamtfarbabstand ΔE (nach DIN 6174) zwischen den Farben der Lackschichten beträgt dabei vorteilhafterweise mindestens 5, vorzugsweise mindestens 7 und besonders bevorzugt mindestens 10.

Besonders bevorzugt wird die Kombination schwarz als erste Lackschicht, weiß als zweite Lackschicht.

Werden so hergestellte Formkörper dann in an sich bekannter Weise mit einem Laser beschriftet, wird die dunkle Lackschicht verdampft bzw. abgebrannt und man erhält eine sehr kontrastreiche Beschriftung (helle Schrift auf dunklem Hintergrund), die insbesondere auch bei Hintergrundbeleuchtung mit einer Lichtquelle aus sichtbarem Licht sehr gut ablesbar ist. Derartige Formkörper eignen sich daher besonders gut für die Herstellung von Displays bzw. Anzeigeskalen, z.B. für Geräte der Unterhaltungselektronik wie Radiogeräte.

Besonders gute Ergebnisse für derartige Verwendungen werden erzielt, wenn man als Formmasse, aus der die entsprechenden Formkörper hergestellt werden, Polymermischungen verwendet, wie sie in der EP 62 223 beschrieben werden, d.h. Mischungen aus Styrol/ Acrylnitril-Copolymerisaten, Methylmethacrylatpolymerisaten und Pfropfpolymerisaten auf der Basis von mit Acrylatkautschuk und/oder Butadienkautschuk schlagzäh modifizierten Styrol/Acrylnitril-Copolymerisaten.

### Beispiele

In den folgenden Beispielen wurden die Beschriftungen mit einem Nd:YAG-Laser durchgeführt, der im IR-Bereich bei einer Wellenlänge von 1,064 µm emittiert.

Der Laserstrahl wurde, wie in der EP-A 330 689 beschrieben, durch zwei computergesteuerte Drehspiegel entsprechend der zu schreibenden Kontur über die im Fokus liegende Oberfläche geführt. Durch Einstellung von Lampenstrom, Blende, Pulsfrequenz und Geschwindigkeit des Laserstrahls wurde die Beschriftung für die verwendeten Mischungen optimiert.

Der ebenfalls in der Tabelle angegebene Kontrast wurde durch Bestimmung des Verhältnisses von Hintergrund- und Zeichenleuchtdichte bei einer gleichmäßigen Beleuchtungsstärke von 500 cd/m² bestimmt.

Die Messung der Lichttransmission τ erfolgte gemäß DIN 5036 an 2 mm starken Rundscheiben.

Folgende Komponenten wurden eingesetzt:
A: Copolymer aus 99 Gew.-% Methylmethacrylat und Gew.-% Methylacrylat mit einem Molekulargewicht (Mₙ) von 110 000 g/mol (Lucryl® G88 der BASF Aktiengesellschaft)
B: Copolymer aus 81 Gew.-% Styrol und 19 Gew.-% Acrylnitril und einer Viskositätszahl von 70 ml/g (gemessen in 0,5 gew.-%iger Lösung in Dimethylformamid bei 25°C).

Alle Abmischungen enthielten weiterhin 10 ppm Ruß (Printex® 90 der Fa. Degussa).

Die Abmischungen wurden auf einem Zweiwellenextruder der Fa. Werner & Pfleiderer abgemischt, homogenisiert und extrudiert. Die Beschaffenheit wurde an im Spritzguß hergestellten, 2 mm starken Plättchen bestimmt.

Die Ergebnisse sind der Tabelle zu entnehmen.

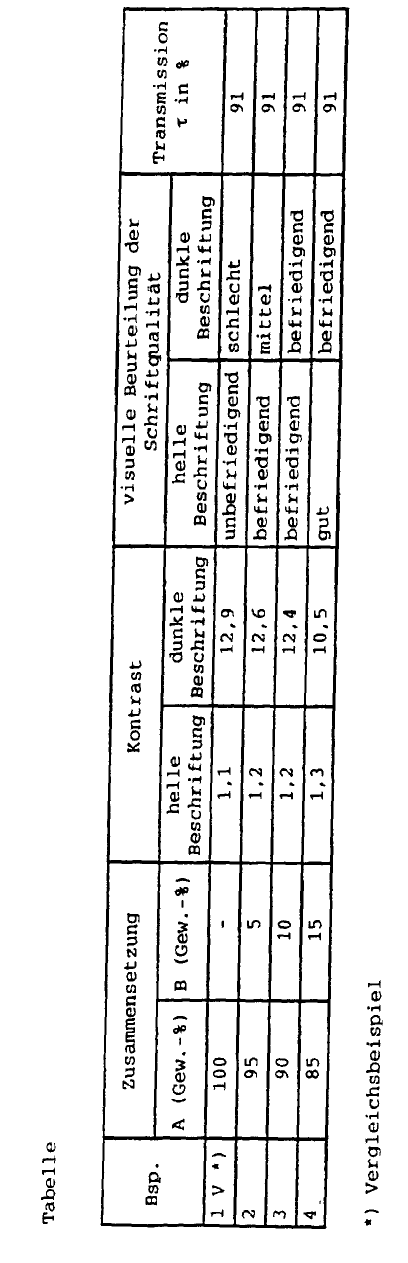

## Patentansprüche

1. Verwendung von Polymermischungen, enthaltend als wesentliche Komponenten
| | | |
|---|---|---|
| A) | 40 bis 99 Gew.-% | eines Polymeren eines Alkylesters der (Meth)acrylsäure |
| B) | 1 bis 50 Gew.-% | eines Copolymeren aus Styrol- und Acrylnitril mit einem Acrylnitrilgehalt von 18 bis 23 Gew.-% |
| C) | 0 bis 50 Gew.-% | eines Kautschuks |
| D) | 0 bis 20 Gew.-% | Zusatzstoffe und Verarbeitungshilfsmittel |
zur Herstellung von mit Hilfe von Laserstrahlung mit einer Beschriftung versehenen Formkörpern.

2. Verwendung nach Anspruch 1, wobei der Brechungsindex der Komponente C) sich vom Brechungsindex der Mischung aus A) und B) um maximal 0,005 Einheiten unterscheidet.

3. Verwendung nach einem der Ansprüche 1 oder 2, wobei die Komponente A aus
| | |
|---|---|
| 80 bis 100 Gew.-% | Methylmethacrylat und |
| 0 bis 20 Gew.-% | Methylacrylat oder n-Butylacrylat oder deren Mischungen |
besteht und ein Molekulargewicht (Zahlenmittelwert Mₙ) im Bereich von 20.000 bis 300 000 g/mol aufweist.

4. Verwendung nach einem der Ansprüche 1 bis 3, wobei als Komponente D) 1 bis 50 ppm Ruß enthalten sind.

5. Laserbeschrifteter Formkörper, hergestellt aus einer Mischung gemäß Anspruch 1, der mit einer zweischichtigen Lackierung, wovon die erste Lackschicht schwarz und die zweite Lackschicht weiß ist, versehen ist.

6. Laserbeschrifteter Formkörper nach Anspruch 5, enthaltend eine Polymermischung aus Styrol/Acrylnitril-Copolymerisat, Methylmethacrylatpolymerisat und Pfropfpolymerisaten auf der Basis von mit Acrylat- oder Butadienkautschuken schlagzäh modifizierten Styrol/Acrylnitril-Copolymerisaten.

## Claims

1. The use of polymer mixtures containing, as essential components,
| | | |
|---|---|---|
| A) | from 40 to 99% by weight | of a polymer of an alkyl ester of (meth)acrylic acid, |
| B) | from 1 to 50% by weight | of a copolymer of styrene and acrylonitrile having an acrylonitrile content of from 18 to 23% by weight, |
| C) | from 0 to 50% by weight | of a rubber, and |
| D) | from 0 to 20% by weight | of additives and processing auxiliaries, |
for the production of moldings provided with an inscription with the aid of laser radiation.

2. The use as claimed in claim 1, where the refractive index of component C) differs from the refractive index of the mixture of A) and B) by a maximum of 0.005 units.

3. The use as claimed in claim 1 or 2, where component A comprises
| | |
|---|---|
| from 80 to 100% by weight | of methyl methacrylate and |
| from 0 to 20% by weight | of methyl acrylate or n-butyl acrylate, or a mixture thereof, |
and has a molecular weight (number average Mₙ) in the range from 20,000 to 300,000 g/mol.

4. The use as claimed in any of claims 1 to 3, where from 1 to 50 ppm of carbon black are included as component D).

5. A laser-inscribed molding, produced from a mixture as claimed in claim 1, which has been provided with a two-coat finish, of which the first coat is black and the second coat is white.

6. A laser-inscribed molding as claimed in claim 5, containing a polymer mixture of styrene-acrylonitrile copolymer, methyl methacrylate polymer and graft polymers based on styrene-acrylonitrile copolymers which have been impact-modified by means of acrylate or butadiene rubbers.

## Revendications

1. Utilisation de mélanges de polymères contenant comme composants essentiels
A) 40 à 99% en poids d'un polymère d'un ester alkylique de l'acide (méth)acrylique
B) 1 à 50% en poids d'un copolymère de styrène et d'acrylonitrile avec une teneur en acrylonitrile de 18 à 23% en poids
C) 0 à 50% en poids d'un caoutchouc
D) 0 à 20% en poids d'additifs et d'agent d'amélioration de la mise en oeuvre, pour la préparation de pièces moulées portant une inscription réalisée à l'aide d'un rayonnement laser.

2. Utilisation selon la revendication 1, l'indice de réfraction du composant C) se différenciant de l'indice de réfraction du mélange de A) et B) d'au plus 0,005 unité.

3. Utilisation selon la revendication 1 ou 2, le composant A étant constitué de 80 à 100% en poids de méthacrylate de méthyle et
0 à 20% en poids d'acrylate de méthyle ou d'acrylate de n-butyle ou de leurs mélanges et présentant un poids moléculaire (valeur moyenne en nombre Mₙ) compris entre 20 000 et 300 000 g /mole.

4. Utilisation selon l'une quelconque des revendications 1 à 3, où sont contenus comme composant D) 1 à 50 ppm de noir de carbone.

5. Forme moulée gravée au laser, préparée à partir d'un mélange selon la revendication 1, qui comporte un revêtement en deux couches, la première couche de revêtement est noire et la deuxième couche de revêtement est blanche.

6. Forme moulée gravée au laser selon la revendication 5, contenant un mélange de copolymère styrène/acrylonitrile, de polymère de méthacrylate de méthyle et de polymères greffés à base de copolymères styrène/acrylonitrile modifiés pour être résilients avec des caoutchoucs d'acrylate ou de butadiène.
